(19) **Europäisches Patentamt / European Patent Office / Office européen des brevets**

(11) **EP 3 904 441 B1**

(12) **EUROPEAN PATENT SPECIFICATION**

(45) Date of publication and mention
of the grant of the patent:
**08.01.2025 Bulletin 2025/02**

(51) International Patent Classification (IPC):
$C08K\ 5/00^{(2006.01)}$     $C08L\ 11/02^{(2006.01)}$
$C08L\ 93/04^{(2006.01)}$     $A41D\ 19/00^{(2006.01)}$
$A41D\ 19/04^{(2006.01)}$     $C08K\ 3/22^{(2006.01)}$
$C08C\ 19/20^{(2006.01)}$     $C08L\ 15/02^{(2006.01)}$
$C08F\ 236/18^{(2006.01)}$

(21) Application number: **19905285.3**

(22) Date of filing: **25.11.2019**

(52) Cooperative Patent Classification (CPC):
(C-Sets available)
**C08C 19/20; C08L 15/02;** A41D 19/0058;
C08F 236/18; C08L 93/04     (Cont.)

(86) International application number:
**PCT/JP2019/045936**

(87) International publication number:
**WO 2020/137297 (02.07.2020 Gazette 2020/27)**

(54) **CHLOROPRENE POLYMER LATEX AND METHOD FOR PRODUCING SAME**

CHLOROPRENPOLYMERLATEX UND VERFAHREN ZUR HERSTELLUNG DAVON

LATEX DE POLYMÈRE CHLOROPRÈNE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2018 JP 2018245755**

(43) Date of publication of application:
**03.11.2021 Bulletin 2021/44**

(73) Proprietor: **Resonac Corporation
Tokyo (JP)**

(72) Inventors:
• **MURATA Tomoaki**
**Tokyo 105-8518 (JP)**
• **OGAWA Masahiro**
**Tokyo 105-8518 (JP)**
• **OGAWA Noriko**
**Tokyo 105-8518 (JP)**
• **KAMIJO Masanao**
**Tokyo 105-8518 (JP)**

(74) Representative: **Strehl Schübel-Hopf & Partner
Maximilianstrasse 54
80538 München (DE)**

(56) References cited:
| | |
|---|---|
| WO-A1-2012/157658 | WO-A1-2012/157658 |
| JP-A- 2003 055 409 | JP-A- 2003 055 409 |
| JP-A- 2011 122 141 | JP-A- 2019 044 116 |
| JP-A- H11 116 622 | JP-A- H11 116 622 |
| JP-A- S6 031 510 | JP-A- S6 031 510 |

EP 3 904 441 B1

(52) Cooperative Patent Classification (CPC): (Cont.)

C-Sets
**C08L 15/02, C08L 93/04, C08K 3/22, C08K 5/31,
C08K 5/39, C08K 5/405;**
C08F 236/18, C08F 236/18;
C08L 93/04, C08L 15/02

**Description**

TECHNICAL FIELD

The present invention relates to chloroprene polymer latexes and moldings obtained by using the same. In further detail, the present invention relates to a sulfur-modified chloroprene polymer latex having a specific particle size, a method for producing the same, a composition of a chloroprene polymer latex comprising the above latex, a metal oxide, a cross-linking accelerator, and an antioxidant, as well as dip-molded products obtained by molding and curing the composition by a dip-molding method. Moldings obtained from the chloroprene polymer latex composition according to the present invention are preferably used in dip-molded products such as gloves, bladders of blood pressure gauges, and rubber threads, and particularly for a medical-glove application.

BACKGROUND ART

Conventionally, materials using chloroprene polymer latexes having good properties such as general rubber physical properties, weatherability, heat resistance, and chemical resistance have been broadly used for example in dip-molded product applications such as gloves, pressure-sensitive adhesive / adhesive applications, and civil engineering and construction applications such as elastic asphalt (modified asphalt), and elastic cement. In medical disposable glove applications such as surgical gloves in particular, shock diseases (anaphylaxis) caused by allergies to natural rubber are a serious problem for patients and medical technicians in terms of hygienic and human life protection. In order to solve the problem, chloroprene rubber (this may be hereinafter abbreviated as "CR") which has flexibility and mechanical properties that are analogous to those of natural rubber and is relatively inexpensive has been used as a material of surgical gloves. Specifically, chloroprene rubber (CR) has excellent features of fit (comfortability) and response (followability) to delicate movement of fingertips, analogous to those of natural rubber.

Among chloroprene polymers, sulfur-modified chloroprene polymers that are modified with sulfur are known to exhibit increased cross-linking rates, and to enable production of high strength films (cf. WO 2015/80075 A1 (US 2016/376383 A1); Patent Literature 1). However, latexes of sulfur-modified chloroprene polymers, when dispersed in water, have poor storage stability and the polymers deteriorate in a short period of time, resulting in short storage life and problems in industrial utilization.

As a method for improving the stability of chloroprene polymer latexes, a method of adding additives such as amines to the latexes is known (cf. JP 5923129 B2; Patent Literature 2). Amines are added to suppress aggregate formation due to reduced pH. This is significantly effective when being added to a sulfur-modified grade in which dehydrochlorination proceeds at a high rate, but does not suppress the cause of reduced pH, namely polymer degradation accompanied by dehydrochlorination. A method for improving stability by adding a nonionic surfactant is also known (cf. JP 5428215 B2; Patent Literature 3). However, nonionic surfactants are a cause of the deterioration of film formability when used in dip-molding applications.

CITATION LIST

PATENT LITERATURE

    Patent Literature 1: WO 2015/80075 A1 (US 2016/376383 A1)
    Patent Literature 2: JP 5923129 B2
    Patent Literature 3: JP 5428215 B2

SUMMARY OF INVENTION

TECHNICAL PROBLEM

Chloroprene polymer latexes undergo gradual pH reduction during storage. This is a phenomenon in which the pH reduction originates in the dehydrochlorination from chloroprene polymer latexes and is accompanied by polymer degradation. Particularly, sulfur-modified chloroprene polymer latexes significantly exhibit the pH reduction, causing polymer degradation in a shorter period of time, resulting in a problem of low storage stability.

Accordingly, the object of the present invention is improving the storage stability of sulfur-modified polychloroprene latexes having excellent cross-linking physical properties such as tensile strength and cross-linking rate.

SOLUTION TO PROBLEM

As a result of earnest studies to achieve the above object, the present inventors have found that the above problem can be solved by using chloroprene polymers having a specific structure (namely sulfur-modified chloroprene polymers), thereby completing the present invention.

The present invention is defined in the appended claims.

ADVANTAGEOUS EFFECTS OF INVENTION

Since the sulfur-modified chloroprene polymer latex having a specific structure according to the present invention reduces the amount of hydrochloric acid eliminated from chloroprene polymers during storage after production, polymer degradation is suppressed, cross-linking physical properties are not lost even after long-term storage compared with conventional sulfur-modified polychloroprene latexes, and physical properties analogous to those immediately after the production are maintained.

BRIEF DESCRIPTION OF DRAWINGS

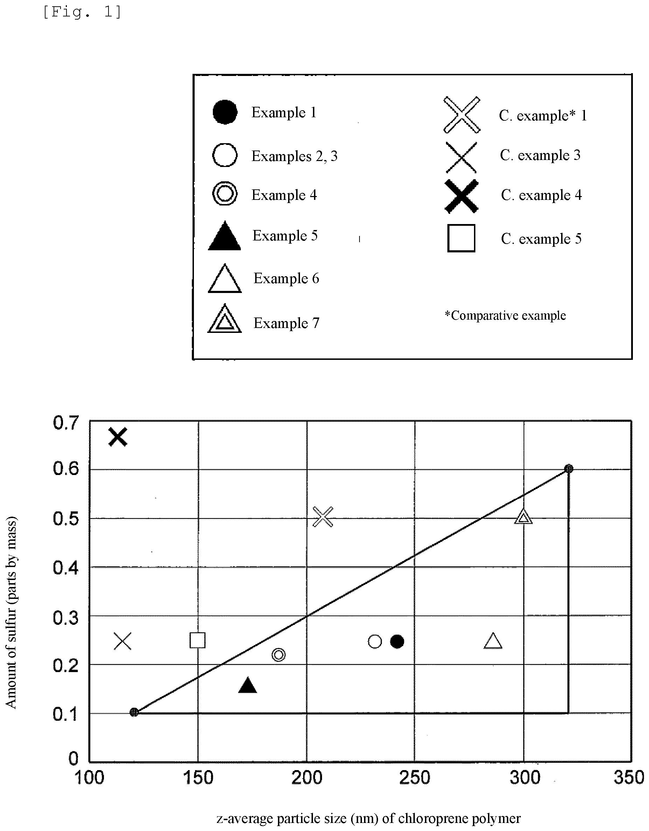

[Fig. 1] is a graph showing the relationship between the ranges defined by the formulae (1) to (3) and the data of examples and comparative examples.

DESCRIPTION OF EMBODIMENTS

The embodiments of the present invention are described in detail below.

[Sulfur-modified chloroprene polymer latex and composition comprising the latex]

Sulfur-modified chloroprene polymer latexes according to the present invention contain a sulfur-modified homopolymer of 2-chloro-1,3-butadiene (chloroprene) (A-1) or a sulfur-modified copolymer of chloroprene and a monomer (A-2) copolymerizable with chloroprene, and sulfur (B).

In the present description, the term "chloroprene polymer (A)" means a homopolymer of chloroprene (A-1) and a copolymer of chloroprene and another copolymerizable monomer (A-2) .

In addition to the above polymer latex components, the sulfur-modified chloroprene polymer latex composition according to the present invention may contain each of a metal oxide (C), a cross-linking accelerator (D), and an antioxidant (E) alone or 2 or more thereof.

The components are described below.

Chloroprene polymer (A)

The chloroprene polymer (A) constituting sulfur-modified chloroprene polymer latexes described in the present embodiment comprises (1) 2-chloro-1,3-butadiene (chloroprene) (A-1) alone as a monomer component of a polymer, (2) chloroprene (A-1) and 2,3-dichloro-1,3-butadiene (A-2-1) as monomer components of a copolymer, or (3) chloroprene (A-1), 2,3-dichloro-1,3-butadiene (A-2-1), and another copolymerizable monomer (A-2-2) as monomer components of a copolymer.

The ratio of 2,3-dichloro-1,3-butadiene (A-2-1) as a monomer component of a copolymer is preferably 5 to 30 parts by mass, more preferably 7 to 24 parts by mass, and still more preferably 10 to 15 parts by mass, relative to the total amount of 2-chloro-1,3-butadiene (chloroprene) (A-1) and 2,3-dichloro-1,3-butadiene (A-2-1) of 100 parts by mass. When the ratio of (A-2) is 5 parts by mass or higher, temporal stability of flexibility is well improved, and when the ratio is 30 parts by mass or lower, polymer crystallization is suppressed and good flexibility is obtained.

As another copolymerizable monomer component (A-2-2), monomers such as 1-chloro-1,3-butadiene, butadiene, isoprene, styrene, acrylonitrile, acrylic acid and the esters thereof, and methacrylic acid and the esters thereof may be preferably used in an amount within a range of 0.1 to 20 parts by mass, relative to 100 parts by mass of 2-chloro-1,3-butadiene (chloroprene) (A-1). Depending on necessity, 2 or more of the above monomer components may be used. By adjusting the use amount to 20 parts by mass or lower, temporal stability of flexibility, in addition to tensile strength and elongation, is well maintained.

Sulfur (B)

With respect to the method for producing sulfur-modified chloroprene polymer latexes having a specific structure according to the present invention, sulfur (B) is used during the polymerization of the chloroprene polymer (A). The ratio of sulfur (B) to be used is higher than 0.10 parts by mass and lower than 0.60 parts by mass, preferably 0.15 to 0.50 parts by mass, and more preferably 0.20 to 0.40 parts by mass, relative to the total amount of the chloroprene monomer (A-1) and the monomer (A-2) copolymerizable with the chloroprene monomer of 100 parts by mass. When the ratio of sulfur exceeds 0.10 parts by mass, the chloroprene polymer latex composition exhibits increased cross-linking reactivity. When lower than 0.60 parts by mass of sulfur is added, good polymerization conversion is achieved without inhibiting the polymerization reaction.

With respect to feed sulfur used in the reaction, the total feed amount of sulfur is assumed to remain in the latex.

[Method for producing sulfur-modified chloroprene polymer latex]

A method (i.e., polymerization method) for producing a sulfur-modified chloroprene polymer latex having a specific structure, which constitutes the sulfur-modified chloroprene polymer latex composition described in the present embodiment, is not particularly limited, but emulsion polymerization is preferred and aqueous emulsion polymerization is particularly preferred from industrial viewpoints.

As an emulsifier used in the emulsion polymerization, an anionic surfactant is preferred, and a commonly-used rosin acid soap is particularly preferred in terms of simple and convenient solidification operations. Other specific examples of the anionic surfactants include a sodium salt of a naphthalene sulfonic acid condensate, a sodium salt of dodecylbenzenesulfonic acid, and a sodium salt of dodecyl sulfate.

The use amount of a rosin acid soap in terms of a rosin acid is preferably 1.5 to 4.0 parts by mass, more preferably 1.6 to 3.7 parts by mass, and still more preferably 1.7 to 3.5 parts by mass, relative to the total amount of the chloroprene monomer (A-1) and the monomer (A-2) copolymerizable with the chloroprene monomer which constitute the chloroprene polymer of 100 parts by mass.

The use amount of surfactants other than the rosin acid soap is preferably 0.5 to 8.0 parts by mass, more preferably 0.7 parts by mass to 7.0 parts by mass, and still more preferably 0.9 to 6.0 parts by mass, relative to the total amount of the chloroprene monomer (A-1) and the monomer (A-2) copolymerizable with the chloroprene monomer which constitute the chloroprene polymer of 100 parts by mass. When the use amount is 0.5 parts by mass or higher, emulsification is well performed, heat generation during polymerization is well controlled, aggregate formation is suppressed, and good product appearance is obtained. By adding other surfactants such as a condensate of sodium naphthalene sulfonate and formaldehyde, the above aggregate formation is also suppressible even in a system in which emulsification is performed with lower than 1.5 parts by mass of a rosin acid. When the use amount is 8.0 parts by mass or lower, the rosin acid does not remain and a molded component is easily detached from a mold (a former) during the molding of the component and is easily peeled off during the use of the component, resulting in good workability and operability, as well as good color tone of products.

With respect to the z-average particle size of sulfur-modified chloroprene polymers contained in the sulfur-modified chloroprene polymer latex, a solution prepared by diluting a latex with pure water to 0.01 to 0.1 % by mass or lower was measured with a dynamic light scattering photometer (ZETASIZER® Nano-S, produced by Malvern Panalytical Ltd). The z-average particle size of the sulfur-modified chloroprene polymer is greater than 120 nm and smaller than 320 nm, preferably 180 or greater and 280 nm or smaller, and more preferably 200 or greater and 250 nm or smaller. The particle size of the sulfur-modified chloroprene polymer is controlled by adjusting the amount of a rosin acid and the amounts of emulsifiers relative to the parts by mass of monomers during polymerization. When the particle size is greater than 120 nm, dehydrochlorination from the chloroprene polymer latex is suppressed, stability of the chloroprene polymer latex is obtained, and aggregate formation is suppressed. When the particle size is smaller than 320 nm, heat generation during polymerization is well controlled, aggregate formation is suppressed, and good product appearance is obtained.

As a method for controlling the particle size of polymers contained in the sulfur-modified chloroprene polymer latex, there is a method of adjusting the amount of an emulsifier at the start of the polymerization. In general, when the same emulsifier is used, the lower the concentration of the emulsifier at the start of polymerization is, the larger the particle size is. In order to obtain a z-average particle size intended by the present invention, it is desirable that a rosin acid which is a raw material of a rosin acid soap is added in an amount of 1.5 to 4.0 parts by mass, relative to the total amount of the chloroprene monomer (A-1) and the monomer (A-2) copolymerizable with the chloroprene monomer which constitute the chloroprene polymer of 100 parts by mass.

The method for controlling the particle size is not particularly limited to the method exemplified above, and the particle size is also controllable by methods different from the above method, such as changing the types of emulsifiers or further adding monomers.

The tetrahydrofuran insoluble fraction of polymers contained in the sulfur-modified chloroprene polymer latex is not particularly limited, but is preferably 40 to 90 % by mass, preferably 50 to 85 % by mass, and more preferably 60 to 80 % by mass in order to make the most of the properties of sulfur-modified grades. The tetrahydrofuran insoluble fraction is controlled by the addition amount of sulfur (B) during polymerization and polymerization conversion. The tetrahydrofuran insoluble fraction of 50 % by mass or higher is preferred since intended tensile strength is obtained, and easy release from a mold during molding is realized. When the tetrahydrofuran insoluble fraction is 85 % by mass or lower, the polymer maintains strength with flexibility, and intended tensile strength and tensile elongation are obtained.

As an initiator for emulsion polymerization, generic radical polymerization initiators may be used. For example, organic or inorganic peroxides such as benzoyl peroxide, potassium persulfate, and ammonium persulfate; and azo compounds such as azobisisobutyronitrile may be used. Promoters such as anthraquinone sulfonate, potassium sulfite, and sodium sulfite may be simultaneously used, if appropriate. These may be used in combination of 2 or more thereof.

During the production of chloroprene polymers, a polymerization terminator is generally added to terminate the reaction when a predetermined polymerization rate is achieved, in order to obtain a polymer having an intended molecular weight and intended molecular weight distribution. The polymerization terminator is not particularly limited and commonly used ones such as phenothiazine, para-t-butylcatechol, hydroquinone, hydroquinone monomethyl ether, and diethyl hydroxyl amine may be used. These may be used in combination of 2 or more thereof.

As shown by the data obtained in the examples and comparative examples below, the sulfur-modified chloroprene polymer latex described in the present embodiment is such that when the total amount of the chloroprene monomer (A-1) and the monomer (A-2) copolymerizable with the chloroprene monomer which constitute the chloroprene polymer (A) is 100 parts by mass, the amount of sulfur (B) contained in the sulfur-modified chloroprene polymer is Y parts by mass, and the z-average particle size of the chloroprene polymer is X nm, the sulfur amount Y in the sulfur-modified chloroprene polymer, and the z-average particle size X of the sulfur-modified chloroprene polymer satisfy the relationships represented by the following formulae (1) to (3):

$$0.10 < Y < 0.60 \qquad (1)$$

$$120 < X < 320 \qquad (2)$$

$$Y < 0.0025X - 0.20 \qquad (3).$$

The above formulae (1) to (3) are satisfied inside of the right-angled triangle in Fig. 1.

Chloroprene polymer latexes are generally prone to deterioration due to oxygen. According to the present invention, stabilizers such as acid acceptors and antioxidants are preferably added as long as the effects of the present invention are not lost.

In the present embodiment, a sulfur-modified chloroprene polymer latex composition which enables the molding of dip-molded products having sufficient tensile strength and flexibility is obtained by adding a metal oxide (C), a cross-linking accelerator (D), and an antioxidant (E) to the sulfur-modified chloroprene polymer latex, depending on necessity. Among raw materials to be used, those water insoluble and those destabilizing the colloid state of the sulfur-modified chloroprene polymer latex are made into aqueous dispersions in advance, and then added to the sulfur-modified chloroprene polymer latex. With the sulfur-modified chloroprene polymer, dip-molded products having sufficient tensile strength are obtainable without a cross-linking accelerator (D).

Metal oxide (C)

The metal oxide (C) is not particularly limited, and specific examples are zinc oxide, lead oxide, and trilead tetraoxide, in which zinc oxide is particularly preferred. These metal oxides may be used in combination of 2 or more thereof. The addition amount of the metal oxides is preferably 1.0 to 10.0 parts by mass, more preferably 2.0 to 9.0 parts by mass, and still more preferably 3.0 to 8.0 parts by mass, relative to the solid content in the sulfur-modified chloroprene polymer latex of 100 parts by mass. When the addition amount of the metal oxides is 1.0 parts by mass or higher, a sufficient cross-linking rate is achieved. When the addition amount is 10.0 parts by mass or lower, an appropriate cross-linking rate is achieved, scorching is suppressed, and the sulfur-modified chloroprene polymer latex composition exhibits good colloid stability, does not cause problem such as sedimentation.

Cross-linking accelerator (D)

As the cross-linking accelerator (D), cross-linking accelerators based on thiuram, dithiocarbamate, thiourea, or guanidine which have been conventionally used in cross-linking chloroprene polymer latexes are used. Examples of thiuram-based cross-linking accelerators include tetraethylthiuram disulfide and tetrabutylthiuram disulfide. Examples of dithiocarbamate-based cross-linking accelerators include sodium dibutyldithiocarbamate, zinc dibutyldithiocarbamate, and zinc diethyldithiocarbamate. Examples of thiourea-based cross-linking accelerators include ethylenethiourea, diethylthiourea, trimethylthiourea, and N,N'-diphenylthiourea (DPTU). Examples of guanidine-based cross-linking accelerators include 1,3-diphenylguanidine (DPG), and 1,3-di-o-tolylguanidine. Cross-linking accelerators may be used in combination of 2 or more. The addition amount of the cross-linking accelerators is preferably 0.1 to 5.0 parts by mass, more preferably 0.3 to 3.0 parts by mass, and still more preferably 0.5 to 1.5 parts by mass, relative to the solid content in the sulfur-modified chloroprene polymer latex of 100 parts by mass (parts by mass on a dry basis). When the addition amount of the cross-linking accelerators is 0.1 parts by mass or higher, a sufficient cross-linking rate is achieved. When the addition amount is 5.0 parts by mass or lower, an appropriate cross-linking rate is obtained, scorching is suppressed, and aggregates and the like are less frequently formed. Further, the crosslinking density in moldings becomes appropriate and good flexibility is obtained.

Antioxidant (E)

As the antioxidant (E), antioxidants for imparting heat resistance (heat-resistant age resistors) and ozone-resistant antioxidants (ozone-resistant age resistors), for example, are preferably used, where these are preferably used in combination. Examples of the heat-resistant age resistors are diphenylamine-based ones such as di(4-octylphenyl) amine, p-(p-toluene-sulfonylamide)diphenylamine, and 4,4'-bis($\alpha,\alpha$-dimethylbenzyl)diphenylamine, which are preferred due to not only their heat resistance but also their stain resistance (suppressed spread of discoloration). As the ozone-resistant age resistor, N,N'-diphenyl-p-phenylenediamine (DPPD) or N-isopropyl-N'-phenyl-p-phenylenediamine (IPPD) may be used. In the case of products such as medical gloves where appearance, particularly color tone, and hygiene property are usually emphasized, hindered-phenolic antioxidants are particularly preferred. The addition amount of the antioxidant (E) is preferably 0.1 to 5.0 parts by mass, more preferably 0.5 to 4.0 parts by mass, and still more preferably 1.0 to 3.0 parts by mass, relative to the solid content in the sulfur-modified chloroprene polymer latex of 100 parts by mass (parts by mass on a dry basis). When the addition amount of the antioxidant (E) is 0.1 parts by mass or higher, sufficient antioxidant effects are obtained. When the addition amount is 5.0 parts by mass or lower, good cross-linking is achieved and an intended color tone is obtained.

Film-shaped rubber is obtained from the sulfur-modified chloroprene polymer latex composition described in the present embodiment by performing an immersion / solidification step, a leaching (elimination of water-insoluble impurities) step, a drying step, and a cross-linking step in this order, each by an ordinary method. Compared with natural rubber, conventional chloroprene polymer latexes require a high cross-linking temperature (from 120 to 140 °C) during the cross-linking step to achieve an intended degree of cross-linking. To the sulfur-modified chloroprene polymer latex described in the present embodiment, however, a lowered cross-linking temperature is applicable. To avoid product appearance problems such as blistering and pinholes, pre-drying is preferably performed in advance at a relatively low temperature of 70 to 100 °C before cross-linking. A preferred cross-linking temperature is from 100 to 110 °C and a preferred cross-linking duration is from 20 to 60 minutes. It is preferred that the cross-linking is sufficiently performed to the extent that tensile strength and elongation at break do not deteriorate. By subjecting a cross-linked film to a tensile test, modulus, tensile strength, and elongation at break are measurable. A modulus is an index of flexibility. The smaller the value is, the higher the flexibility is. When an intended degree of cross-linking is achieved, a cross-linked film obtained from the composition comprising the sulfur-modified chloroprene polymer latex described in the present embodiment, and a metal oxide, a cross-linking accelerator, and an antioxidant has a modulus at 300 % elongation of preferably 2.5 MPa or lower, more preferably 2.0 MPa or lower, and still more preferably 1.6 MPa or lower; a tensile strength of preferably 17 MPa or higher, more preferably 20 MPa or higher, and still more preferably 23 MPa or higher; and an elongation at break of preferably 800 % or higher, more preferably 900 % or higher, and still more preferably 950 % or higher. The modulus at 300 % elongation means that the lower the value is, the more excellent the flexibility is.

Compared with conventional rubber, the rubber that is cross-linked and produced under the above conditions requires small energy cost for its production, maintains basic properties which chloroprene polymers originally have, and has excellent flexibility.

Example(s)

The present invention is described based on examples and comparative examples below.

Storage stability:

The storage stability of sulfur-modified chloroprene polymer latexes was evaluated by the following method.
After a week from polymerization, sulfur-modified chloroprene polymer latexes having a pH value at a temperature of 23 °C that was adjusted to 13.00 ± 0.05 with a 5 % by mass aqueous potassium hydroxide solution were subjected to an accelerated aging test in an ordinary oven at a temperature of 70 °C and measured. After three days (72 hours) under the conditions at a temperature of 70 °C, the pH value of the sulfur-modified chloroprene polymer latexes at a temperature of 23 °C was measured, and a latex having a pH value of 12.00 or higher was determined to be "AA" having excellent storage stability, and a latex having a pH value of lower than 12.00 was determined to be "BB" having poor stability.

Polymerization conversion, solid content:

The latex after polymerization was collected, and a polymerization conversion was calculated from solid content after drying performed at a temperature of 141 °C for 30 minutes. Solids and polymerization conversion were obtained by the following formulae.

Solid content (% by mass) = [(mass after drying at 141 °C for 30 minutes)/(mass of latex before drying)] $\times$ 100

Polymerization conversion (%) = [(amount of formed polymer/feed amount of monomers)] $\times$ 100

Here, the amount of formed polymer was obtained by subtracting solid content (such as emulsifiers) other than the polymer from solid content after the polymerization. For the solid content other than the polymer, the amount of components not volatilizing under the conditions at a temperature of 141 °C was calculated from polymerization raw materials.

Physical properties of sulfur-modified chloroprene polymer latex:

The physical properties of sulfur-modified chloroprene polymer latexes were evaluated by the following method.

[Measurement method]

Tetrahydrofuran insoluble fraction:

A sulfur-modified chloroprene polymer latex in an amount of 1 g was added dropwise to 100 mL of THF (tetrahydrofuran), and was shaken for 24 hours. The obtained mixture was subjected to centrifugal separation with a centrifuge (high-speed cooling centrifuge H-9R, produced by Kokusan Co., Ltd.) at 14,000 rpm for 60 minutes, and a supernatant dissolved phase was separated. The dissolved phase was evaporated / dried and solidified at a temperature of 100 °C for 1 hour, the mass of the obtained dry solid matter was measured, and the tetrahydrofuran insoluble fraction was obtained by the following formula.

Tetrahydrofuran insoluble fraction (%) = {1 - [(mass of --> dry solid matter (g))/(amount of solid content in 1 g of chloroprene polymer latex (g))]} $\times$ 100

Particle size:

A z-average particle size was obtained by measuring a solution obtained by diluting a latex with pure water to have a concentration of 0.01 to 0.1 % with a dynamic light scattering photometer (ZETASIZER® Nano-S, produced by Malvern Panalytical Ltd.) as described in the above "Description of Embodiments".

Production and cross-linking of dip-molded film:

In accordance with a mixing ratio shown in Table 1 below, a sulfur-modified chloroprene polymer latex composition was prepared. The obtained composition was fed into a stirring vessel equipped with a three one motor and was stirred for 5 minutes to be mixed and homogenized. The homogenized sulfur-modified chloroprene polymer latex composition was left to age at room temperature (20 °C) for 24 hours.

A ceramic plate having a length of 200 mm, a width of 100 mm, and a thickness of 5 mm was used as a mold of a dip-molded film, the mold was immersed in a coagulation liquid consisting of a 30 % by mass aqueous calcium nitrate solution, and was dried in an oven at a temperature of 40 °C for 5 minutes. The dried mold was immersed in the above sulfur-modified chloroprene polymer latex composition and was pulled up to form a film, which was then dried in an oven at a temperature of 70 °C for 30 minutes. Subsequently, cross-linking was performed by heating in an ordinary oven at a temperature of 110 °C for 30 minutes, and after left to cool in the atmosphere, a film was cut out from the mold. Thereby a cross-linked film was obtained.

Evaluation of physical properties after cross-linking:

In accordance with JIS-K6251-2017, a cross-linked sheet was cut with a No. 6 dumbbell-shaped cutting blade to obtain a test piece. The thickness of the test piece was 0.15 to 0.25 mm.

The obtained film test piece was subjected to a tensile test performed by a method in accordance with JIS-K6251-2017 at 23 °C to measure modulus at 300 % elongation, tensile strength, and elongation at break.

Example 1: Production of sulfur-modified chloroprene polymer latex

A reactor having an internal volume of 5 L was used, and 90.3 parts by mass of 2-chloro-1,3-butadiene (chloroprene) (produced by Tokyo Chemical Industry, Co., Ltd.) (A-1), 9.7 parts by mass of 2,3-dichloro-1,3-butadiene (produced by Tokyo Chemical Industry, Co., Ltd.) (A-2) and 87.3 parts by mass of pure water, 2.4 parts by mass of a rosin acid (Rosin HTR, produced by Arakawa Chemical Industries, Ltd.), 0.25 parts by mass of sulfur (B), 2.9 parts by mass of potassium hydroxide (guaranteed reagent, produced by Wako Junyaku K.K.), 1.4 parts by mass of sodium hydroxide (guaranteed reagent, produced by Wako Junyaku K.K.), 1.0 part by mass of a sodium salt of a $\beta$-naphthalene sulfonate formaldehyde condensate (produced by Kao Corporation), and $0.29 \times 10^{-6}$ parts by mass of copper sulfate were fed into the reactor and were emulsified. After the rosin acid was converted into a rosin acid soap (mixture of potassium rosinate and sodium rosinate), polymerization was performed in a nitrogen gas atmosphere at an initial temperature of 40 °C, using potassium persulfate (1st grade, produced by Wako Junyaku K.K.) as an initiator. When the polymerization conversion was confirmed to be 80 % or higher, the temperature was increased to 45 °C and polymerization was continued until the polymerization conversion was 98 % or higher. Subsequently, unreacted monomers were eliminated via steam distillation and 3.4 parts by mass of diethanolamine (produced by Nippon Shokubai Co., Ltd.) was added to obtain a sulfur-modified chloroprene polymer latex. Since the amount of diethanolamine which is a stabilizer affects pH change during the storage stability test, diethanolamine was added in the same amount in parts by mass in all the examples and comparative examples below.

The obtained sulfur-modified chloroprene polymer latex had a tetrahydrofuran insoluble fraction of 70 % and a z-average particle size of 240 nm.

In accordance with a mixing ratio of components shown in Table 1, a composition of a sulfur-modified chloroprene polymer latex was prepared, and the production and cross-linking of a dip-molded film was performed to produce a test rubber film.

The modulus at 300 % elongation, tensile strength, and elongation at break of the test rubber film were measured. As described in Table 1, the results were such that the modulus at 300 % elongation was 1.5 MPa, the tensile strength was 24 MPa, and the elongation at break was 1,000 %.

According to the storage stability evaluation based on the above criteria of measuring the pH value of a sulfur-modified chloroprene polymer latex after 72 hours, the test rubber film was evaluated as "AA" showing excellent stability.

Examples 2 to 7 and Comparative examples 1 to 5:

Examples 2 to 7 and Comparative examples 1 to 5 were performed in the same manner as described in Example 1 except for using the feed components and the mixing amounts thereof described in Table 1.

The results of Examples 2 to 7 and Comparative examples 1 to 5 are summarized in Table 1. With respect to the feed components in Table 1, parenthesized equivalents (parts by mass) relative to the total amount of chloroprene (A-1) and 2,3-dichloro-1,3-butadiene (A-2) of 100 parts by mass are also described.

In addition, the relationship between the ranges defined by the above formulae (1) to (3) and the data of the examples and comparative examples are shown in Fig. 1.

[Table 1]

| | Example No. | Example 1 | Example 2 | Example 3 | Example 4 | Example 5 | Example 6 | Example 7 |
|---|---|---|---|---|---|---|---|---|
| Feed components | (A-1) Chloroprene kg (parts by mass) | 1.36 (90.3) | 1.29 (85.6) | 1.29 (85.6) | 1.50 (100.0) | 1.29 (85.6) | 1.36 (90.3) | 1.36 (90.3) |
| | (A-2) 2,3-dichlorobutadiene kg (parts by mass) | 0.15 (9.7) | 0.22 (14.4) | 0.22 (14.4) | 0 (0.0) | 0.22 (14.4) | 0.15 (9.7) | 0.15 (9.7) |
| | (B) Sulfur g (parts by mass) | 3.8 (0.25) | 3.8 (0.25) | 3.8 (0.25) | 3.3 (0.22) | 2.3 (0.15) | 3.8 (0.25) | 7.5 (0.50) |
| | Rosin acid g (parts by mass) | 36.0 (2.4) | 36.0 (2.4) | 36.0 (2.4) | 37.5 (2.5) | 51.0 (3.4) | 27.0 (1.8) | 27.0 (1.8) |
| Polymerization | Temperature (°C) | 40 - 45 | 40 - 45 | 40 - 45 | 40 - 45 | 40 - 45 | 40 - 45 | 40 - 45 |
| | Conversion (%) | 98 | 98 | 98 | 82 | 88 | 83 | 84 |
| Latex compositions | (A) Chloroprene-based polymer latex (parts by mass on a dry basis) | 100 | 100 | 100 | 100 | 100 | 100 | 100 |
| | (C) Zinc oxide dispersion[1] (parts by mass on a dry basis) | 5 | 5 | 5 | 5 | 5 | 5 | 5 |
| | (D) Accelerator DPTU[2] (parts by mass on a dry basis) | 2 | 2 | 0.25 | 0 | 0 | 0 | 0 |
| | (D) Accelerator DPG[3] (parts by mass on a dry basis) | 1 | 1 | 1 | 0 | 0 | 0 | 0 |
| | (D) Accelerator ZDBC[4] (parts by mass on a dry basis) | 0 | 0 | 0 | 0 | 0 | 0 | 0 |
| | (E) Phenolic antioxidant[5] (parts by mass on a dry basis) | 2 | 2 | 2 | 1 | 1 | 1 | 1 |
| | Physical properties of (A) — Tetrahydrofuran insoluble fraction (%) | 70 | 72 | 62 | 89 | 51 | 9 | 10 |
| | z-average particle size (mn) | 240 | 230 | 230 | 180 | 170 | 280 | 300 |
| Physical properties | Cross-linking temperature (°C), duration (minutes) | 110, 30 | 110, 30 | 110, 30 | 110, 30 | 110, 30 | 110, 30 | 110, 30 |
| | Modulus at 300 % elongation (MPa) | 1.5 | 1.6 | 1.0 | 1.0 | 1.1 | 0.8 | 0.9 |
| | Tensile strength (MPa) | 24 | 24 | 24 | 21 | 24 | 18 | 19 |
| | Elongation at break (%) | 1000 | 1000 | 1125 | 1150 | 1175 | 1350 | 1325 |
| | Storage stability | AA | AA | AA | AA | AA | AA | AA |

[Table 1] (continued)

| | Example No. | Comparative example 1 | Comparative example 2 | Comparative example 3 | Comparative example 4 | Comparative example 5 |
|---|---|---|---|---|---|---|
| Feed components | (A-1) Chloroprene kg (parts by mass) | 1.36 (90.3) | 1.29 (85.6) | 1.36 (90.3) | 1.36 (90.3) | 1.50 (100.0) |
| | (A-2) 2,3-dichlorobutadiene kg (parts by mass) | 0.15 (9.7) | 0.22 (14.4) | 0.15 (9.7) | 0.15 (9.7) | 0 (0.0) |
| | (B) Sulfur g (parts by mass) | 7.5 (0.50) | 7.5 (0.50) | 3.8 (0.25) | 11.3 (0.75) | 3.8 (0.25) |
| | Rosin acid g (parts by mass) | 37.5 (2.5) | 150 (1.0) | 51.0 (3.4) | 51.0 (3.4) | 51.0 (3.4) |
| Polymerization | Temperature (°C) | 40-45 | 40-45 | 40-45 | 40-45 | 40-45 |
| | Conversion (%) | 84 | < 30 | 98 | 95 | 99 |
| Latex compositions | (A) Chloroprene-based polymer latex (parts by mass on a dry basis) | 100 | - | 100 | 100 | 100 |
| | (C) Zinc oxide dispersion[1] (parts by mass on a dry basis) | 5 | - | 5 | 5 | 5 |
| | (D) Accelerator DPTU[2] (parts by mass on a dry basis) | 0 | - | 0 | 0 | 2 |
| | (D) Accelerator DPG[3] (parts by mass on a dry basis) | 0 | - | 1 | 1 | 1 |
| | (D) Accelerator ZDBC[4] (parts by mass on a dry basis) | 0 | - | 0 | 0 | 0 |
| | (E) Phenolic antioxidant[5] (parts by mass on a dry basis) | 1 | - | 1 | 1 | 2 |
| Physical properties of (A) | Tetrahydrofuran insoluble fraction (%) | | - | 77 | 5 | 65 |
| | z-average particle size (nm) | 210 | - | 120 | 120 | 150 |

(continued)

| Physical properties | Example No. | Comparative example 1 | Comparative example 2 | Comparative example 3 | Comparative example 4 | Comparative example 5 |
|---|---|---|---|---|---|---|
| | Cross-linking temperature (°C), duration (minutes) | 110, 30 | - | 110, 30 | 110, 30 | 110, 30 |
| | Modulus at 300 % elongation (MPa) | 1.0 | - | 1.2 | 1.4 | 1.7 |
| | Tensile strength (MPa) | 24 | - | 18 | 26 | 26 |
| | Elongation at break (%) | 1325 | - | 1000 | 1025 | 750 |
| | Storage stability | BB | - | BB | BB | BB |

1) AZ-SW, produced by Osaki Industry Co., Ltd.
2) Nocceler C (diphenylthiourea), produced by Ouchi Shinko Chemical Industrial Co., Ltd.
3) Nocceler D (diphenylguanidine), produced by Ouchi Shinko Chemical Industrial Co., Ltd.
4) Nocceler BZ (zinc dibutylcarbamate), produced by Ouchi Shinko Chemical Industrial Co., Ltd.
5) L-306-40 (Irganox 1076 dispersion), produced by Chukyo Yushi Co., Ltd.

Comparative example 1 was performed under the same conditions as those described in Example 1 except for adding sulfur in an amount twice the amount described in Example 1. Comparative example 1 shows that storage stability is not obtained when the addition amount of sulfur exceeds an appropriate range even though the particle size is within an appropriate range.

Comparative example 2 was performed under the same conditions as those described in Example 7 except for adding the rosin acid in an amount 0.56 times the amount described in Example 7. Comparative example 2 shows that the polymerization rate is reduced when the amount of the rosin acid is lower than the appropriate range, which is industrially unpractical.

Comparative examples 3 and 5 were performed under the same conditions as those described in Example 1 except for adding the rosin acid in an amount 1.41 times the amount described in Example 1 and slightly changing the mixing ratios of the vulcanization accelerator and antioxidant. Comparative examples 3 and 5 show that when the amount of the rosin acid exceeds an appropriate range, the particle size is reduced, resulting in poor storage stability.

Comparative example 4 in which the addition amount of sulfur is 5.0 times the amount described in Example 5 shows that when the amount of sulfur exceeds an appropriate range, stability is lowered.

Fig. 1 shows that chloroprene polymer latexes exhibit good storage stability when the amount Y of sulfur (parts by mass) contained in the chloroprene polymer (A), and the z-average particle size X (nm) of the chloroprene polymer are within a range where the formulae (1) to (3) are satisfied.

## Claims

1. A sulfur-modified chloroprene polymer latex, comprising: an emulsifier and a sulfur-modified chloroprene polymer that is a chloroprene polymer (A) modified with sulfur (B), wherein when the total amount of a chloroprene monomer (A-1) and a monomer (A-2) copolymerizable with the chloroprene monomer which constitute the chloroprene polymer is 100 parts by mass, the amount of sulfur (B) contained in the sulfur-modified chloroprene polymer is Y parts by mass, and the z-average particle size of the sulfur-modified chloroprene polymer is X nm, the sulfur amount Y in the sulfur-modified chloroprene polymer, and the z-average particle size X of the sulfur-modified chloroprene polymer satisfy the relationships represented by the following formulae (1) to (3):

$$0.10 < Y < 0.60 \qquad (1)$$

$$120 < X < 320 \qquad (2)$$

$$Y < 0.0025X - 0.20 \qquad (3).$$

2. The sulfur-modified chloroprene polymer latex according to Claim 1, comprising, as an emulsifier, a rosin acid soap obtained by saponifying 1.5 to 4.0 parts by mass of a rosin acid with an excess amount of sodium hydroxide and/or potassium hydroxide, relative to the total amount of the chloroprene monomer (A-1) and the monomer (A-2) copolymerizable with the chloroprene monomer which constitute the chloroprene polymer (A) of 100 parts by mass.

3. A sulfur-modified chloroprene polymer latex composition, comprising a metal oxide (C) in a ratio of 1.0 to 10.0 parts by mass, a cross-linking accelerator (D) in a ratio of 0.0 to 3.0 parts by mass, and an antioxidant (E) in a ratio of 0.1 to 5.0 parts by mass, relative to 100 parts by mass of solid content in the sulfur-modified chloroprene polymer latex according to Claim 1 or 2.

4. A dip-molded product obtained by molding and curing the sulfur-modified chloroprene polymer latex composition according to Claim 3 by a dip-molding method.

5. The dip-molded product according to Claim 4, which is a disposable rubber glove.

6. A method for producing a sulfur-modified chloroprene polymer latex according to Claim 1, comprising: polymerizing a composition comprising a chloroprene monomer (A-1), a monomer (A-2) copolymerizable with the chloroprene monomer, sulfur (B), and a rosin acid, wherein the amount of the rosin acid is 1.5 to 4.0 parts by mass and the amount of sulfur is higher than 0.10 parts by mass and lower than 0.60 parts by mass, relative to the total amount of the chloroprene monomer (A-1) and the monomer (A-2) copolymerizable with the chloroprene monomer of 100 parts by mass.

**Patentansprüche**

1. Schwefelmodifizierter Chloroprenpolymerlatex, umfassend: einen Emulgator und ein schwefelmodifiziertes Chloroprenpolymer, das ein mit Schwefel (B) modifiziertes Chloroprenpolymer (A) ist, wobei, wenn die Gesamtmenge eines Chloroprenmonomers (A-1) und eines mit dem Chloroprenmonomer copolymerisierbaren Monomers (A-2), die das Chloroprenpolymer bilden, 100 Masseteile beträgt, die Menge an Schwefel (B), die in dem schwefelmodifizierten Chloroprenpolymer enthalten ist, Y Masseteile beträgt und die z-mittlere Teilchengröße des schwefelmodifizierten Chloroprenpolymers X nm beträgt, die Schwefelmenge Y in dem schwefelmodifizierten Chloroprenpolymer und die z-mittlere Teilchengröße X des schwefelmodifizierten Chloroprenpolymers die Beziehungen der folgenden Formeln (1) bis (3) erfüllen:

$$0{,}10 < Y < 0{,}60 \qquad (1)$$

$$120 < X < 320 \qquad (2)$$

$$Y < 0{,}0025X - 0{,}20 \qquad (3).$$

2. Schwefelmodifizierter Chloroprenpolymerlatex nach Anspruch 1, umfassend als Emulgator eine Kolophoniumseife, erhalten durch Verseifen von 1,5 bis 4,0 Masseteilen einer Kolophoniumssäure mit einer überschüssigen Menge Natriumhydroxid und/oder Kaliumhydroxid, bezogen auf die Gesamtmenge des Chloroprenmonomers (A-1) und des mit dem Chloroprenmonomer copolymerisierbaren Monomers (A-2), die das Chloroprenpolymer (A) bilden, von 100 Masseteilen.

3. Schwefelmodifizierte Chloroprenpolymerlatex-Zusammensetzung, umfassend ein Metalloxid (C) in einem Verhältnis von 1,0 bis 10,0 Masseteilen, einen Vernetzungsbeschleuniger (D) in einem Verhältnis von 0,0 bis 3,0 Masseteilen und ein Antioxidationsmittel (E) in einem Verhältnis von 0,1 bis 5,0 Masseteilen, bezogen auf 100 Masseteile Feststoffgehalt in dem schwefelmodifizierten Chloroprenpolymerlatex nach Anspruch 1 oder 2.

4. Tauchgeformtes Produkt, erhalten durch Formen und Härten der schwefelmodifizierten Chloroprenpolymerlatexzusammensetzung nach Anspruch 3 durch ein Tauchformverfahren.

5. Tauchgeformtes Produkt nach Anspruch 4, das ein Einweg-Gummihandschuh ist.

6. Verfahren zur Herstellung eines schwefelmodifizierten Chloroprenpolymerlatex nach Anspruch 1, umfassend: Polymerisieren einer Zusammensetzung, umfassend ein Chloroprenmonomer (A-1), ein Monomer (A-2), das mit dem Chloroprenmonomer copolymerisierbar ist, Schwefel (B) und eine Kolophonium-Säure, wobei die Menge der Kolophonium-Säure 1,5 bis 4,0 Masseteile beträgt und die Menge an Schwefel höher als 0,10 Masseteile und niedriger als 0,60 Masseteile ist, bezogen auf die Gesamtmenge des Chloroprenmonomers (A-1) und des mit dem Chloroprenmonomer copolymerisierbaren Monomers (A-2) von 100 Masseteilen.

**Revendications**

1. Latex de polymère chloroprène modifié au soufre, comprenant : un émulsifiant et un polymère chloroprène modifié au soufre qui est un polymère chloroprène (A) modifié par du soufre (B), dans lequel lorsque la quantité totale d'un monomère chloroprène (A-1) et d'un monomère (A-2) copolymérisable avec le monomère chloroprène qui constituent le polymère chloroprène est de 100 parties en masse, la quantité de soufre (B) contenue dans le polymère chloroprène modifié au soufre est de Y parties en masse, et la taille de particule moyenne en z du polymère chloroprène modifié au soufre est de X nm, la quantité de soufre Y dans le polymère chloroprène modifié au soufre, et la taille de particule moyenne en z X du polymère chloroprène modifié au soufre satisfont les relations représentées par les formules (1) à (3) suivantes :

$$0{,}10 < Y < 0{,}60 \quad (1)$$

$$120 < X < 320 \quad (2)$$

$$Y < 0,0025X - 0,20 \qquad (3).$$

2. Latex de polymère chloroprène modifié au soufre selon la revendication 1, comprenant, en tant qu'émulsifiant, un savon d'acide résinique obtenu par saponification de 1,5 à 4,0 parties en masse d'un acide résinique avec une quantité excessive d'hydroxyde de sodium et/ou d'hydroxyde de potassium, par rapport à la quantité totale du monomère chloroprène (A-1) et du monomère (A-2) copolymérisable avec le monomère chloroprène qui constituent le polymère chloroprène (A) de 100 parties en masse.

3. Composition de latex de polymère chloroprène modifié au soufre, comprenant un oxyde de métal (C) en un rapport de 1,0 à 10,0 parties en masse, un accélérateur de réticulation (D) en un rapport de 0,0 à 3,0 parties en masse, et un antioxydant (E) en un rapport de 0,1 à 5,0 parties en masse, par rapport à 100 parties en masse de contenu solide dans le latex de polymère chloroprène modifié au soufre selon la revendication 1 ou 2.

4. Produit moulé par immersion obtenu par moulage et durcissement de la composition de latex de polymère chloroprène modifié au soufre selon la revendication 3 par un procédé de moulage par immersion.

5. Produit moulé par immersion selon la revendication 4, qui est un gant en caoutchouc jetable.

6. Procédé de production d'un latex de polymère chloroprène modifié au soufre selon la revendication 1, comprenant : la polymérisation d'une composition comprenant un monomère chloroprène (A-1), un monomère (A-2) copolymérisable avec le monomère chloroprène, du soufre (B), et un acide résinique, dans lequel la quantité de l'acide résinique est de 1,5 à 4,0 parties en masse et la quantité de soufre est supérieure à 0,10 partie en masse et inférieure à 0,60 partie en masse, par rapport à la quantité totale du monomère chloroprène (A-1) et du monomère (A-2) copolymérisable avec le monomère chloroprène de 100 parties en masse.

[Fig. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201580075 A1
- US 2016376383 A1
- JP 5923129 B
- JP 5428215 B